# EUROPEAN PATENT APPLICATION

(11) **EP 4 826 965 A1**
(43) Veröffentlichungstag der Anmeldung: **21.10.2026**
(21) Anmeldenummer: 23961126.2
(22) Anmeldetag: 14.12.2023
(51) Int. Cl.: H02K 3/24

(54) **MOTORSTATOR, MOTOR UND FAHRZEUGANTRIEBSSYSTEM**

(71) Anmelder: Schaeffler Technologies AG & Co. KG, 91074 Herzogenaurach (DE)
(72) Erfinder: ZHANG, Chenlong, Shanghai 201804 (CN); YUE, Xiaotian, Shanghai 201804 (CN)
(74) Vertreter: Schaeffler Technologies
(86) Internationale Anmeldenummer: PCT/CN2023/138659
(87) Internationale Veröffentlichungsnummer: WO 2025/123264

(57) **Zusammenfassung**

Bereitgestellt wird ein Motorstator, umfassend ein Gehäuse (1), einen Eisenkern (2), eine Wicklung (3) und Spulenkörper (4). Die Spulenkörper (4) sind am Eisenkern (2) angebracht und Windungen der Wicklung (3) sind mittels entsprechender Spulenkörper (4) um die Wicklungszähne (2t) des Eisenkerns (2) gewickelt. Das Gehäuse (1), der Eisenkern (2) und die Spulenkörper (4) definieren einen ringförmigen Strömungsweg (P), der sich in der Umfangsrichtung erstreckt, das Ende einer axialen Seite der Wicklung (3) befindet sich in dem ringförmigen Strömungsweg (P) und das Gehäuse (1) ist derart mit einer Einlassöffnung (11h) versehen, dass ein Kühlfluid, das durch die Einlassöffnung (11h) in den ringförmigen Strömungsweg (P) eintritt, entlang von Wicklungsschlitzen zu dem Ende der anderen axialen Seite der Wicklung (3) strömen kann. Auf diese Weise wird die Kühlkonstruktion des Motorstators in einer relativ einfachen Konstruktion ausgebildet, wodurch der Motorstator wirksam gekühlt wird. Ebenfalls bereitgestellt sind ein Motor, umfassend den Motorstator, und ein Fahrzeugleistungssystem, umfassend den Motor.

## Beschreibung

### Technisches Gebiet

Die vorliegende Anmeldung betrifft das Gebiet der Motoren und insbesondere betrifft sie einen Motorstator mit einer Kühlkonstruktion, einen Motor und ein Fahrzeugleistungssystem, das den Motor umfasst.

### Hintergrund

Ein Motor wird zum Ausgeben eines Drehmoments und Leistung verwendet und ein Kühlen des Motors ist sehr wichtig, damit der Motor ein bestimmtes Drehmoment und eine bestimmte Leistung ausgibt. Wenn sich der Motor in einem hocheffizienten Betriebszustand befindet, macht ein ohmscher Verlust einen Großteil des Energieverlusts aus und somit kann bekannt sein, dass eine Kühlfähigkeit einer Kühlkonstruktion des Motors für eine Wicklung ein wichtiger Faktor ist, der eine konstante Ausgangsleistung des Motors in diesem Zustand beeinflusst.

Bei einem bestehenden Motor sind einige Kühlkonstruktionen zum Nutzen eines Kühlmechanismus vom Spritztyp konfiguriert, beispielsweise kann die Kühlkonstruktion so ausgestaltet sein, dass sie eine Düse aufweist, die ein Kühlfluid (beispielsweise Kühlöl) direkt auf eine Wicklung sprüht, um Wärme abzuführen; einige Kühlkonstruktionen sind zum Nutzen eines Kühlmechanismus vom Tauchtyp ausgestaltet, beispielsweise ist ein Strömungsweg, der sich in einer Umfangsrichtung und Axialrichtung erstreckt, derart im Inneren eines Motorstators ausgebildet, dass mindestens ein Abschnitt einer Wicklung in ein Kühlfluid im Strömungsweg eingetaucht werden kann, wodurch die Wicklung gekühlt wird. In letzterem Fall ist eine Konfiguration zum Definieren des Strömungswegs üblicherweise komplex und anfällig für Leckagen, was zu relativ hohen Pumpverlusten führt.

### Kurzdarstellung

Die vorliegende Anmeldung wird im Hinblick auf den vorstehend beschriebenen Stand der Technik bereitgestellt. Eine Aufgabe der vorliegenden Anmeldung ist das Bereitstellen eines Motorstators und eines Motors, der den Motorstator umfasst, ein Strömungsweg zum Strömen eines Kühlfluids ist mit einer relativ einfachen Konfiguration in einer Kühlkonstruktion des Motorstators realisiert, wodurch eine effektive Kühlung einer Wicklung des Motorstators erleichtert wird und eine negative Wirkung, die durch eine übermäßig hohe Temperatur des Motorstators während des Betriebs des Motors bewirkt wird, reduziert wird. Eine andere Aufgabe der vorliegenden Anmeldung ist das Bereitstellen eines Fahrzeugleistungssystems, das den vorstehend beschriebenen Motor umfasst.

Um die vorstehend genannten Aufgaben zu lösen, werden im Rahmen der vorliegenden Anmeldung die folgenden technischen Lösungen übernommen.

Die vorliegende Anmeldung stellt einen Motorstator wie folgt bereit, umfassend:
ein Gehäuse mit einem zylindrischen Körper und einer ringförmigen Seitenwand, wobei sich die ringförmige Seitenwand von einem Ende einer axialen Seite des zylindrischen Körpers zu einer radial inneren Seite erstreckt;
einen Eisenkern, der sich an der radial inneren Seite des zylindrischen Körpers befindet und sich auf der anderen axialen Seite der ringförmigen Seitenwand befindet, wobei der Eisenkern am zylindrischen Körper befestigt ist und der Eisenkern eine Vielzahl von Wicklungszähnen aufweist, die in einer Umfangsrichtung des Motorstators in Abständen verteilt sind; wobei zwischen je zwei benachbarten Wicklungszähnen ein Wicklungsschlitz definiert ist;
eine Wicklung, die eine Vielzahl von Windungen umfasst, wobei die Windungen derart um entsprechende Wicklungszähne gewickelt sind, dass die Wicklung auf dem Eisenkern montiert ist; und
Spulenkörper, die am Eisenkern befestigt sind, wobei die Windungen mittels entsprechender Spulenkörper um die Wicklungszähne gewickelt sind,
wobei das Gehäuse, der Eisenkern und die Spulenkörper einen ringförmigen Strömungsweg definieren, der sich in der Umfangsrichtung erstreckt, sich ein Ende einer axialen Seite der Wicklung in dem ringförmigen Strömungsweg befindet und das Gehäuse derart mit einer Einlassöffnung versehen ist, dass ein Kühlfluid, das durch die Einlassöffnung in den ringförmigen Strömungsweg eintritt, entlang des Wicklungsschlitzes zu einem Ende der anderen axialen Seite der Wicklung strömen kann.

Bei einer optionalen Lösung stellt der zylindrische Körper eine äußere periphere Wand des ringförmigen Strömungswegs dar, die Spulenkörper stellen eine innere periphere Wand des ringförmigen Strömungswegs dar, die ringförmige Seitenwand stellt eine Seitenwand des ringförmigen Strömungswegs dar, die äußere periphere Wand definiert den ringförmigen Strömungsweg von einer radial äußeren Seite, der Boden definiert den ringförmigen Strömungsweg von einer radial inneren Seite und die Seitenwand definiert den ringförmigen Strömungsweg von der axialen Seite.

Bei einer anderen optionalen Lösung ist die Einlassöffnung in der äußeren peripheren Wand ausgebildet und dringt in die äußere periphere Wand ein.

Bei einer anderen optionalen Lösung, in einem Zustand, in dem der Motorstator in einer Position montiert ist, in der eine axiale Richtung des Motorstators parallel zu einer horizontalen Ebene verläuft, befindet sich die Einlassöffnung an einem obersten Abschnitt der äußeren peripheren Wand in einer vertikalen Richtung.

Bei einer anderen optionalen Lösung handelt es sich bei dem Motorstator um einen Stator eines Motors mit konzentrierter Wicklung, die Spulenkörper weisen einen ersten Endzahnabschnitt und einen zweiten Endzahnabschnitt auf, die sich in Richtung einer axialen Seite relativ zu dem Eisenkern erstrecken, die ersten Endzahnabschnitte befinden sich an einer radial äußeren Seite der zweiten Endzahnabschnitte, der erste Endzahnabschnitt einer Vielzahl der Spulenkörper ist in der Umfangsrichtung angeordnet, der zweite Endzahnabschnitt einer Vielzahl der Spulenkörper ist in der Umfangsrichtung angeordnet,
die äußere periphere Wand befindet sich an einer radial äußeren Seite der ersten Endzahnabschnitte und die zweiten Endzahnabschnitte einer Vielzahl der Spulenkörper liegen an der ringförmigen Seitenwand an und stellen die innere periphere Wand dar.

Bei einer anderen optionalen Lösung ist die ringförmige Seitenwand mit einem ringförmigen Montageabschnitt versehen, der in Richtung der Spulenkörper vorsteht, und der zweite Endzahnabschnitt einer Vielzahl der Spulenkörper ist als Ganzes von einer radial äußeren Seite auf den ringförmigen Montageabschnitt aufgesteckt.

Bei einer anderen optionalen Lösung ist der zweite Endzahnabschnitt einer Vielzahl der Spulenkörper als Ganzes durch Spielpassung oder Übergangspassung auf den ringförmigen Montageabschnitt montiert.

Bei einer anderen optionalen Lösung liegt der zweite Endzahnabschnitt einer Vielzahl der Spulenkörper von der anderen axialen Seite an der ringförmigen Seitenwand an.

Die vorliegende Anmeldung stellt ferner einen Motor wie folgt bereit, der den Motorstator nach einer der vorstehenden technischen Lösungen umfasst.

Die vorliegende Anmeldung stellt ferner ein Fahrzeugleistungssystem wie folgt bereit, das den Motor nach der vorstehenden technischen Lösung umfasst.

Durch Verwenden der vorstehenden technischen Lösungen stellt die vorliegende Anmeldung einen Motorstator, einen Motor und ein Fahrzeugleistungssystem bereit, das den Motor umfasst. Im Motorstator der vorliegenden Anmeldung definieren das Gehäuse, der Eisenkern und die Spulenkörper einen ringförmigen Strömungsweg zum Eintreten eines Kühlfluids, ein Ende der Wicklung kann in ein Kühlfluid im ringförmigen Strömungsweg eingetaucht werden und das in den ringförmigen Kühlströmungsweg eintretende Kühlfluid kann von einer Position, an der sich das Ende einer axialen Seite der Wicklung befindet, durch einen axialen Strömungsweg im Eisenkern (beispielsweise zwischen benachbarten Windungen befindlich) zu einer Position strömen, an der sich das Ende der anderen axialen Seite der Wicklung befindet. Auf diese Weise ist die Kühlkonstruktion des Motorstators bei den technischen Lösungen der vorliegenden Anmeldung in einer relativ einfachen Konfiguration ausgebildet, wodurch der Motorstator wirksam gekühlt wird und negative Wirkungen, die möglicherweise durch eine übermäßig hohe Temperatur während des Betriebs des Motorstators bewirkt werden, reduziert werden. Darüber hinaus kann eine effektive Kühlung des Motorstators eine konstante Ausgangsleistung des Motors erhöhen und gleichzeitig die Nutzungsdauer des Motors verlängern. Des Weiteren wird das Kühlfluid von der Einlassöffnung in Richtung des ringförmigen Strömungswegs eingespeist und dann durch den axialen Strömungsweg derart abgelassen, dass das Kühlfluid im ringförmigen Strömungsweg unter konstanter Erneuerung ein dynamisches Gleichgewicht erreichen kann, wodurch Kühlwirkungen auf die Wicklung verbessert werden. Die vorstehenden Lösungen der vorliegenden Anmeldung eignen sich besonders für einen Motor mit konzentrierter Wicklung mit kleinen Abmessungen (insbesondere kleinen axialen Abmessungen).

### Kurzbeschreibung der Zeichnungen

FIG. 1A ist ein schematisches perspektivisches Diagramm, das eine lokale Konstruktion eines Motors gemäß einer Ausführungsform der vorliegenden Anmeldung zeigt.
FIG. 1B ist ein anderes schematisches perspektivisches Diagramm, das eine Konstruktion aus FIG. 1A zeigt.
FIG. 1C ist ein schematisches Teilschnittdiagramm, das die Konstruktion aus FIG. 1A zeigt, in der eine Trennlinie weggelassen ist.
FIG. 2A ist ein schematisches perspektivisches Diagramm, das ein Gehäuse des Motors aus FIG. 1A zeigt.
FIG. 2B ist ein schematisches Schnittdiagramm, das das Gehäuse aus FIG. 2A zeigt, in der eine Trennlinie weggelassen ist.
FIG. 3A ist ein schematisches perspektivisches Diagramm, das eine Baugruppe eines Eisenkerns, einer Wicklung und Spulenkörper des Motors aus FIG. 1A zeigt.
FIG. 3B ist ein vergrößertes schematisches Diagramm, das eine lokale Konstruktion der Baugruppe aus FIG. 3A zeigt.

### Beschreibung von Bezugszeichen

- 1: Gehäuse;
- 11: zylindrischer Körper;
- 11h: Einlassöffnung;
- 12: ringförmige Seitenwand;
- 12p: ringförmiger Montageabschnitt;
- 2: Eisenkern;
- 2t: Wicklungszahn;
- 3: Wicklung;
- 4: Spulenkörper;
- 41: erster Endzahnabschnitt;
- 42: zweiter Endzahnabschnitt;
- P: ringförmiger Strömungsweg;
- A: axiale Richtung;
- R: radiale Richtung.

### Ausführliche Beschreibung

Im Folgenden werden spezifische Ausführungsformen der vorliegenden Anmeldung in Bezug auf die beigefügten Zeichnungen der Beschreibung ausführlich beschrieben. Es versteht sich, dass diese konkreten Beschreibungen Fachleute nur lehren sollen, wie die vorliegende Anmeldung zu realisieren ist, und weder alle möglichen Implementierungen der vorliegenden Anmeldung erschöpfend darlegen noch den Schutzumfang der vorliegenden Anmeldung einschränken sollen.

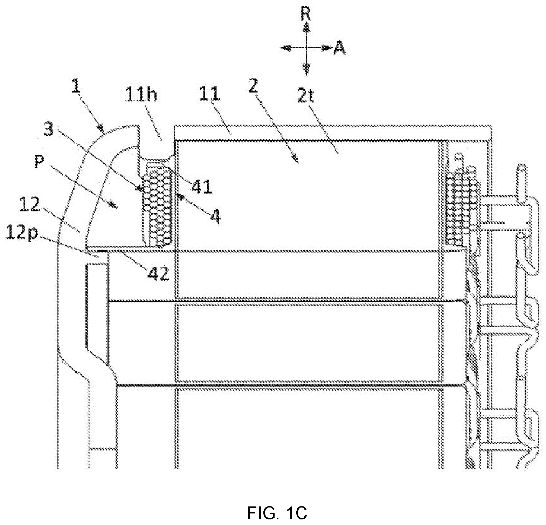

In der vorliegenden Anmeldung bezeichnen die Begriffe "axiale Richtung", "radiale Richtung" und "Umfangsrichtung" eine axiale Richtung, radiale Richtung bzw. Umfangsrichtung eines Motors. "Axiale Seite" bezieht sich auf die linke Seite in FIG. 1C und "andere axiale Seite" bezieht sich auf die rechte Seite in FIG. 1C. "Radial äußere Seite" bezieht sich auf eine von der Mittelachse des Motors in radialer Richtung abgewandte Seite, beispielsweise auf die Oberseite in FIG. 1C, und "radial innere Seite" bezieht sich auf eine Seite nahe der Mittelachse des Motors in radialer Richtung, beispielsweise auf die Unterseite in FIG. 1C.

Der Motor gemäß einer Ausführungsform der vorliegenden Anmeldung ist ein Motor mit konzentrierter Wicklung, der in erster Linie ein Gehäuse, einen Motorstator, einen Motorrotor und eine Welle umfasst; der Motorstator, der Motorrotor und die Welle sind auf koaxiale Weise konfiguriert und befinden sich im Wesentlichen innerhalb des durch das Gehäuse definierten Raums. Der Motorstator und das Gehäuse sind aneinander befestigt und der Motorstator umfasst einen Eisenkern und eine Wicklung. Der Motorrotor befindet sich an einer radial inneren Seite des Motorstators und ist relativ zum Motorstator drehbar; zwischen Motorrotor und Motorstator ist ein Luftspalt. Die Welle und der Motorrotor können aneinander befestigt sein und die Welle befindet sich an einer radial inneren Seite des Motorrotors. Ferner ist der Motor gemäß einer Ausführungsform der vorliegenden Anmeldung mit einer Kühlkonstruktion versehen, die zum Kühlen des Motorstators verwendet wird. In der Kühlkonstruktion werden ein Eisenkern und eine Wicklung (insbesondere ein Ende einer axialen Seite einer Spule einer Windung der Wicklung) des Motorstators durch Verwendung von Kühlöl als Kühlfluid gekühlt. Daher handelt es sich bei dem Motor gemäß einer Ausführungsform der vorliegenden Anmeldung um einen ölgekühlten Motor.

Eine spezifische Konstruktion des Motors gemäß einer Ausführungsform der vorliegenden Anmeldung wird nachstehend unter Bezugnahme auf die beigefügten Zeichnungen der Beschreibung beschrieben, wobei insbesondere eine Kühlkonstruktion veranschaulicht ist, die zur Kühlung eines Motorstators verwendet wird.

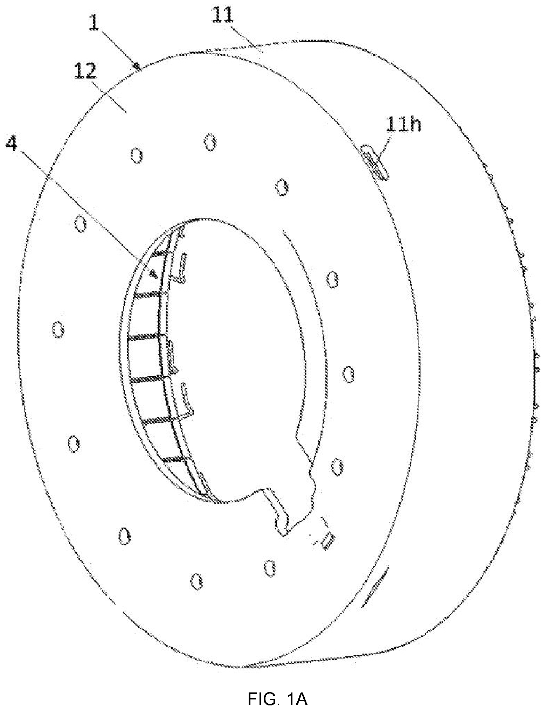

Wie in FIG. 1A bis FIG. 1C gezeigt, umfasst ein Motor gemäß einer Ausführungsform der vorliegenden Anmeldung ein Gehäuse 1, einen Eisenkern 2, eine Wicklung 3 und Spulenkörper 4, die miteinander zusammengebaut sind, wobei der Eisenkern 2, die Wicklung 3 und die Spulenkörper 4 alle am Gehäuse 1 befestigt sind, wobei der Eisenkern 2, die Wicklung 3 und die Spulenkörper 4 einen Motorstator darstellen.

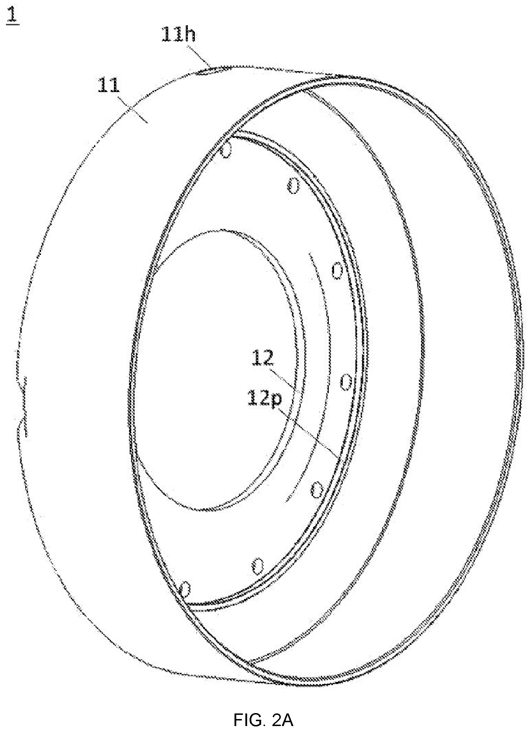

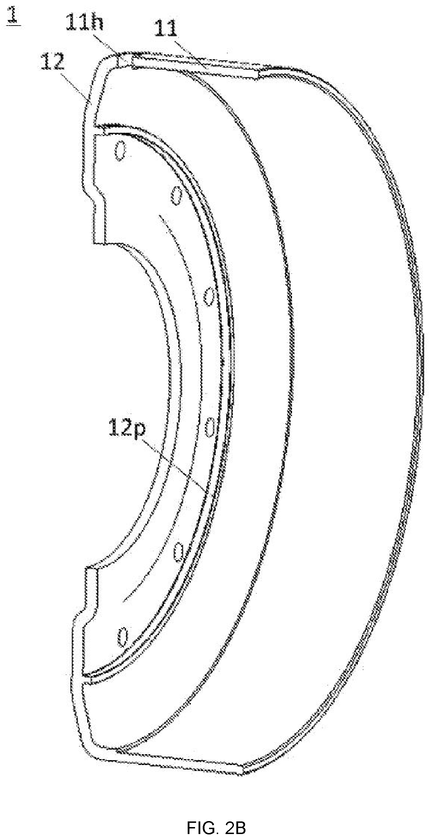

In dieser Ausführungsform umfasst das Gehäuse 1, wie in FIG. 1A bis FIG. 1C sowie FIG. 2A und FIG. 2B gezeigt, einen zylindrischen Körper 11 und eine ringförmige Seitenwand 12, die einstückig ausgebildet sind. Der zylindrische Körper 11 bildet eine zylindrische Form aus und der zylindrische Körper 11 befindet sich an einer radial äußeren Seite des Eisenkerns 2, der Wicklung 3 und der Spulenkörper 4 und der zylindrische Körper 11 und der Eisenkern 2 können durch Presspassung unbeweglich miteinander montiert sein. Der zylindrische Körper 11 ist mit einer Einlassöffnung 11h versehen, die in radialer Richtung R in ihn eindringt, und ein Kühlfluid kann durch die Einlassöffnung 11h des Gehäuses 1 in einen ringförmigen Strömungsweg P eintreten, der durch das Gehäuse 1, den Eisenkern 2 und die Spulenkörper 4 definiert ist. Die ringförmige Seitenwand 12 bildet eine ringförmige Form aus und die ringförmige Seitenwand 12 befindet sich an einer axialen Seite des Eisenkerns 2, der Wicklung 3 und der Spulenkörper 4. Die ringförmige Seitenwand 12 erstreckt sich über eine bestimmte Länge von einem Ende einer axialen Seite des zylindrischen Körpers 11 in Richtung einer radial inneren Seite und die ringförmige Seitenwand 12 erstreckt sich kontinuierlich in einer Umfangsrichtung über einen gesamten Umfang, um Komponenten im Inneren des Gehäuses 1 zu schützen. Zusätzlich ist die ringförmige Seitenwand 12 ferner mit einem ringförmigen Montageabschnitt 12p versehen, der in Richtung der Spulenkörper 4 (d. h. in Richtung der anderen axialen Seite) vorsteht, und der ringförmige Montageabschnitt 12p erstreckt sich in der Umfangsrichtung kontinuierlich über den gesamten Umfang. Der ringförmige Montageabschnitt 12p passt mit dem zweiten Endzahnabschnitt 42 der Spulenkörper 4 derart zusammen, dass die zweiten Endzahnabschnitte 42 von der radial äußeren Seite einen Überlappstoß auf den ringförmigen Montageabschnitt 12p bilden können. Auf diese Weise ist jeder zweite Endzahnabschnitt 42 der Spulenkörper 4 als Ganzes auf den ringförmigen Montageabschnitt 12p aufgesteckt.

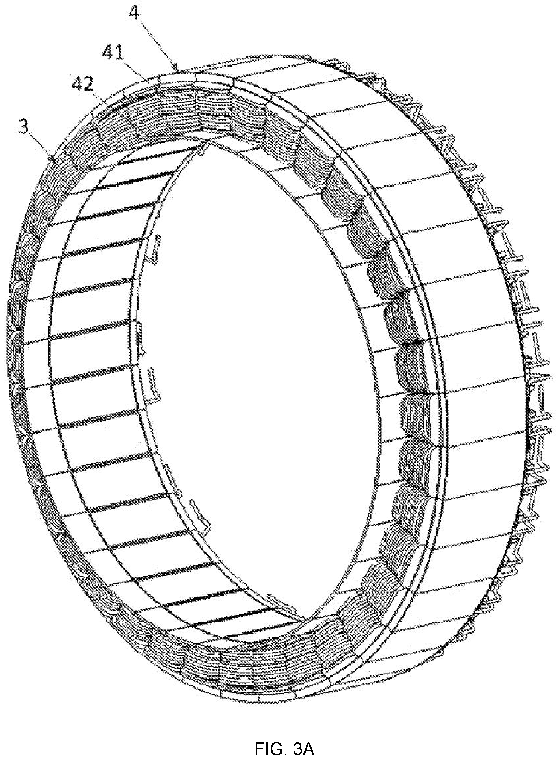

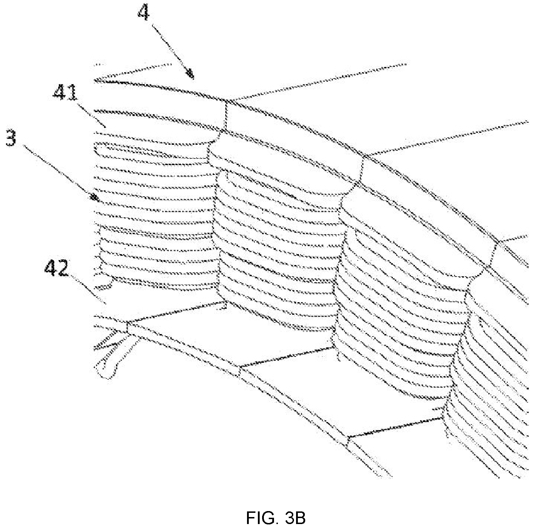

In dieser Ausführungsform umfasst der Eisenkern 2, wie in FIG. 1A bis FIG. 1C sowie FIG. 3A und FIG. 3B gezeigt, eine Vielzahl von Wicklungszähnen 2t. Die Vielzahl von Wicklungszähnen 2t steht in Richtung der radial inneren Seite vor und ist in der Umfangsrichtung in Abständen verteilt. Zwischen je zwei in Umfangsrichtung benachbarten Wicklungszähnen 2t ist ein Wicklungsschlitz definiert, jeder Wicklungsschlitz dringt in den Eisenkern 2 in einer axialen Richtung A ein und jeder Wicklungsschlitz weist eine radiale Öffnung auf, die sich in Richtung der radial inneren Seite öffnet; die radiale Öffnung wird im Wesentlichen durch die zweiten Endzahnabschnitte 42 abgedichtet. Ferner ist der Eisenkern 2 als Ganzes durch Presspassung an dem zylindrischen Körper 11 des Gehäuses 1 befestigt und der gesamte Eisenkern 2 befindet sich im Wesentlichen auf der radial inneren Seite des zylindrischen Körpers 11.

In dieser Ausführungsform ist die Wicklung 3, wie in FIG. 1A bis FIG. 1C sowie FIG. 3A und FIG. 3B gezeigt, auf dem Eisenkern 2 montiert und jede Windung der Wicklung 3 ist auf die entsprechenden Wicklungszähne 2t gewickelt. Die Wicklung 3 kann aus mit Isoliermaterialien ummantelten Kupferleitern ausgebildet sein und die Windungen der Wicklung 3 passieren während eines Wickelprozesses einen Wickelschlitz benachbart zu dem Wicklungszahn 2t. Zwei benachbarte Spulen in einem gleichen Wicklungsschlitz können beabstandet oder teilweise in Kontakt sein, wodurch im Wicklungsschlitz ein axialer Strömungsweg ausgebildet wird, der sich in axialer Richtung A erstreckt, um in den Eisenkern 2 einzudringen, und das Kühlfluid im ringförmigen Strömungsweg P kann durch den axialen Strömungsweg zu einer Position strömen, an der sich das Ende der anderen axialen Seite der Wicklung 3 befindet.

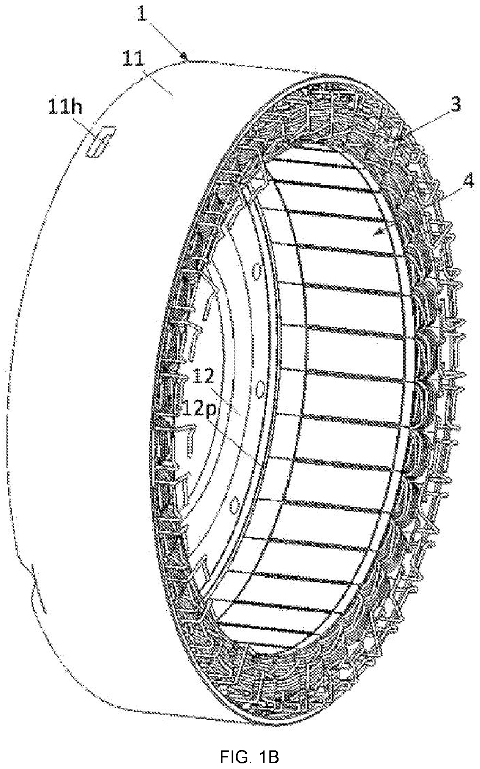

In dieser Ausführungsform sind die Spulenkörper 4 (die auch als Wickelgerüste bezeichnet werden können) aus einem Isoliermaterial hergestellt. Die Spulenkörper 4 können auf eine sekundäre formende Weise an dem Eisenkern 2 angebracht sein oder die Spulenkörper 4 können alternativ separat hergestellt und durch andere mechanische Mittel unbeweglich an dem Eisenkern 2 angebracht sein. Wie in FIG. 1B und FIG. 1C gezeigt, entspricht jeder Wicklungszahn 2t einem Spulenkörper 4, jeder Spulenkörper 4 ist an dem entsprechenden Wicklungszahn 2t angebracht, einerseits werden die Spulenkörper 4 zum Stützen der auf die Wicklungszähne 2t gewickelten Spulenkörper verwendet und andererseits werden die Spulenkörper 4 zur sekundären Isolierung zwischen der Windung und dem Eisenkern 2 verwendet.

Wie in FIG. 1C gezeigt, weisen die Spulenkörper 4 einen ersten Endzahnabschnitt 41 und einen zweiten Endzahnabschnitt 42 auf, die sich relativ zum Eisenkern 2 in Richtung einer axialen Seite erstrecken. Die ersten Endzahnabschnitte 41 der Vielzahl von Spulenkörpern 4 sind in Umfangsrichtung derart eng angeordnet, dass zwischen der Vielzahl von benachbarten ersten Endzahnabschnitten 41 im Wesentlichen kein Spalt besteht und alle ersten Endzahnabschnitte 41 eine ringförmige Konstruktion ausbilden, die sich kontinuierlich in der Umfangsrichtung erstreckt. Die zweiten Endzahnabschnitte 42 der Vielzahl von Spulenkörpern 4 sind in Umfangsrichtung derart angeordnet, dass zwischen der Vielzahl von benachbarten zweiten Endzahnabschnitten 42 im Wesentlichen kein Spalt besteht und alle zweiten Endzahnabschnitte 42 eine ringförmige Konstruktion ausbilden, die sich kontinuierlich in der Umfangsrichtung erstreckt. Die ersten Endzahnabschnitte 41 befinden sich auf einer radial äußeren Seite der zweiten Endzahnabschnitte 42, die ersten Endzahnabschnitte 41 und die zweiten Endzahnabschnitte 42 sind in der radialen Richtung R voneinander beabstandet und ein Ende einer axialen Seite der Windung der Wicklung 3 befindet sich zwischen den ersten Endzahnabschnitten 41 und den zweiten Endzahnabschnitten 42 in der radialen Richtung R.

Ferner, wie in FIG. 1B und FIG. 3A gezeigt, dichten die zweiten Endzahnabschnitte 42 die radialen Öffnungen der Wicklungsschlitze ab. Darüber hinaus, wie in FIG. 1C und FIG. 3B gezeigt, ist eine axiale Länge der zweiten Endzahnabschnitte 42, die sich vom Eisenkern 2 in Richtung der axialen Seite erstrecken, größer als eine axiale Länge der ersten Endzahnabschnitte 41, die sich vom Eisenkern 2 in Richtung der axialen Seite erstrecken; somit kann jeder zweite Endzahnabschnitt 42 von der radial äußeren Seite einen Überlappstoß auf den ringförmigen Montageabschnitt 12p der ringförmigen Seitenwand 12 des Gehäuses 1 bilden, wodurch die zweiten Endzahnabschnitte 42 als Ganzes auf den ringförmigen Montageabschnitt 12p aufgesteckt werden. Des Weiteren können die zweiten Endzahnabschnitte 42 von der anderen axialen Seite an einem Hauptkörperabschnitt der ringförmigen Seitenwand 12 anliegen. Beispielsweise kann zwischen den zweiten Endzahnabschnitten 42 und dem ringförmigen Montageabschnitt 12p eine Spielpassung oder Übergangspassung angenommen werden und selbst wenn zwischen den zweiten Endzahnabschnitten 42 und dem ringförmigen Montageabschnitt 12p kleine Spalte vorhanden sind, wird ein Füllen des ringförmigen Strömungswegs P mit Kühlfluid dadurch nicht beeinträchtigt. Eine derartige Montagekonstruktion verlangt keine zusätzlichen Komponenten, weist einen einfachen Zusammenbauprozess auf und ist weniger anfällig für Lockerung und reduziert somit entsprechende Herstellungskosten und Zusammenbaukosten.

Durch Annehmen der vorstehenden Lösungen wird der ringförmige Strömungsweg P durch das Gehäuse 1, den Eisenkern 2 und die Spulenkörper 4 definiert. Der zylindrische Körper 11 bildet eine äußere periphere Wand des ringförmigen Strömungswegs P aus, die zweiten Endzahnabschnitte 42 der Spulenkörper 4 bilden eine innere periphere Wand des ringförmigen Strömungswegs P aus und die ringförmige Seitenwand 12 bildet eine Seitenwand des ringförmigen Strömungswegs P aus. Die äußere periphere Wand befindet sich an einer radial äußeren Seite der inneren peripheren Wand, die äußere periphere Wand definiert den ringförmigen Strömungsweg P von der radial äußeren Seite und die innere periphere Wand definiert den ringförmigen Strömungsweg von einer radial inneren Seite. Die Seitenwand definiert den ringförmigen Strömungsweg P von einer axialen Seite aus und die Seitenwand erstreckt sich schräg in Richtung der axialen Seite und erstreckt sich gleichzeitig von der äußeren peripheren Wand in Richtung der inneren peripheren Wand.

Um des Weiteren zu ermöglichen, dass das Kühlfluid von der Einlassöffnung 11h in den ringförmigen Strömungsweg P eingespeist wird und dann durch den vorstehend genannten axialen Strömungsweg auf der anderen axialen Seite des Eisenkerns 2 ausströmt, wodurch ermöglicht wird, dass das Kühlfluid im ringförmigen Strömungsweg P ein dynamisches Gleichgewicht erreicht und gleichzeitig konstant erneuert wird, ist die Einlassöffnung 11h an der äußeren peripheren Wand ausgebildet und dringt in die äußere periphere Wand ein. Bei dieser Ausführungsform, wenn der Motor in einer Position montiert ist, in der die axiale Richtung A des Motors parallel zu einer horizontalen Ebene verläuft, kann sich die Einlassöffnung 11h an einem obersten Abschnitt der äußeren peripheren Wand in einer vertikalen Richtung befinden. Auf diese Weise ist es unter einer Wirkung der Schwerkraft für die Kühlfluideinspeisung aus der Einlassöffnung 11h ferner vorteilhaft, den ringförmigen Strömungsweg P gleichmäßig zu füllen.

Durch Annehmen der vorstehenden Lösungen wird der Motor gemäß einer Ausführungsform der vorliegenden Anmeldung mit dem ringförmigen Strömungsweg P mit guter Dichtungsleistung in einer relativ einfachen Konstruktion versehen. Das Kühlfluid kann durch die Einlassöffnung 11h in den ringförmigen Strömungsweg P eintreten und diesen füllen, das Kühlfluid kann durch den axialen Strömungsweg, der durch die Wicklungsnuten des Eisenkerns 2 gebildet wird, ausströmen und somit kann das Kühlfluid ein dynamisches Gleichgewicht erreichen und wird gleichzeitig konstant erneuert, wodurch es konstant allen Teilen der Wicklung 3 gute Kühlung bereitstellt. Auf diese Weise können die negativen Wirkungen, die durch eine übermäßig hohe Temperatur des Motorstators während des Betriebs des Motors bewirkt werden, reduziert werden. Darüber hinaus weist die Kühlkonstruktion des Motors der vorliegenden Anmeldung eine einfache Konfiguration auf und erfordert keine Ausgestaltung zusätzlicher Komponenten, wodurch entsprechende Kosten reduziert werden.

Es versteht sich, dass die vorstehenden Ausführungsformen nur beispielhaft sind und die vorliegende Anmeldung nicht einschränken sollen. Fachleute können verschiedene Abwandlungen und Änderungen an den vorstehenden Ausführungsformen gemäß der Lehre der vorliegenden Anmeldung vornehmen, ohne von dem Schutzumfang der vorliegenden Anmeldung abzuweichen. Im Folgenden werden die technischen Lösungen der vorliegenden Anmeldung ergänzend beschrieben.
i. In der vorliegenden Anmeldung wird ferner ein Fahrzeugleistungssystem bereitgestellt, umfassend den Motor der vorliegenden Anmeldung. Das Fahrzeugleistungssystem kann ein elektrisches Brückenantriebssystem sein und das elektrische Brückenantriebssystem kann ferner einen Übertragungsmechanismus, wie ein Getriebe, umfassen, und der Motor ist in Übertragungsverbindung mit einer Eingangswelle des Getriebes, um einen bidirektionalen Drehmomenttransfer zu erreichen. Das elektrische Brückenantriebssystem kann als ein Antriebssystem für ein batteriebetriebenes Elektrofahrzeug verwendet werden oder kann bei Zusammenwirken mit einem Verbrennungsmotor unter Bilden eines Hybridleistungssystems für ein Hybridfahrzeug verwendet werden.
ii. Bei den technischen Lösungen des Motors der vorliegenden Anmeldung kann ein Ölversorgungssystem in Verbindung mit der Einlassöffnung 11h des Gehäuses 1 außerhalb des Gehäuses 1 des Motors bereitgestellt sein. Das Ölversorgungssystem kann eine Pumpe, einen Ölkanal (Ölrohr) und dergleichen umfassen, wodurch das Ölversorgungssystem zum Zuführen von Kühlöl verwendet wird, das als ein Kühlfluid für die Kühlkonstruktion dient.
iii. In einer beispielhaften Variante des Motors der vorliegenden Anmeldung kann die Einlassöffnung 11h an anderen Stellen, wie an der Seitenwand, bereitgestellt sein und Konstruktionen anderer Bauteile können derart angemessen geändert werden, dass das Kühlfluid durch die Einlassöffnung 11h in den ringförmigen Strömungsweg P strömen und anschließend abgelassen werden kann.
iv. Es kann sich verstehen, dass die technischen Lösungen gemäß der vorliegenden Anmeldung besonders für einen Motor mit konzentrierter Wicklung geeignet sind und die axialen Abmessungen eines Eisenkerns 2 des Motors mit konzentrierter Wicklung klein sein können. Auf diese Weise ist es vorteilhaft, dass nur eine geringe Menge Kühlfluid benötigt wird, um den gesamten ringförmigen Strömungsweg P zu füllen, und gleichzeitig wird das Kühlfluid im ringförmigen Strömungsweg P konstant erneuert.
v. In einem Beispiel können die Spulenkörper 4 aus Kunststoff hergestellt sein und sind durch ein Spritzgießverfahren unbeweglich mit dem Eisenkern 2 verbunden, beispielsweise umhüllen sie eine radial mittlere Position (des Motorstators) der Wicklungszähne 2t des Eisenkerns 2. In einem Beispiel können die Spulenkörper 4 integrierte (einstückige) Komponenten sein, die durch ein Spritzgießverfahren ausgebildet sind.
vi. Der vorstehend gezeigte und beschriebene Motorstator ist einer der Gegenstände der vorliegenden Anmeldung und kann ein eigenständiges Produkt darstellen.

## Patentansprüche

1. Motorstator, umfassend:
ein Gehäuse (1) mit einem zylindrischen Körper (11) und einer ringförmigen Seitenwand (12), wobei sich die ringförmige Seitenwand (12) von einem Ende einer axialen Seite des zylindrischen Körpers (11) zu einer radial inneren Seite erstreckt;
einen Eisenkern (2), der sich an der radial inneren Seite des zylindrischen Körpers (11) befindet und sich auf der anderen axialen Seite der ringförmigen Seitenwand (12) befindet, wobei der Eisenkern (2) am zylindrischen Körper (11) befestigt ist und der Eisenkern (2) eine Vielzahl von Wicklungszähnen (2t) aufweist, die in einer Umfangsrichtung des Motorstators in Abständen verteilt sind; wobei zwischen je zwei benachbarten Wicklungszähnen (2t) ein Wicklungsschlitz definiert ist;
eine Wicklung (3), die eine Vielzahl von Windungen umfasst, wobei die Windungen derart um entsprechende Wicklungszähne (2t) gewickelt sind, dass die Wicklung (3) auf dem Eisenkern (2) montiert ist; und
Spulenkörper (4), die am Eisenkern (2) befestigt sind, wobei die Windungen mittels entsprechender Spulenkörper (4) um die Wicklungszähne (2t) gewickelt sind,
wobei das Gehäuse (1), der Eisenkern (2) und die Spulenkörper (4) einen ringförmigen Strömungsweg (P) definieren, der sich in der Umfangsrichtung erstreckt, sich ein Ende einer axialen Seite der Wicklung (3) in dem ringförmigen Strömungsweg (P) befindet und das Gehäuse (1) derart mit einer Einlassöffnung (11h) versehen ist, dass ein Kühlfluid, das durch die Einlassöffnung (11h) in den ringförmigen Strömungsweg (P) eintritt, entlang des Wicklungsschlitzes zu einem Ende der anderen axialen Seite der Wicklung (3) strömen kann.

2. Motorstator nach Anspruch 1, wobei der zylindrische Körper (11) eine äußere periphere Wand des ringförmigen Strömungswegs (P) darstellt, die Spulenkörper (4) eine innere periphere Wand des ringförmigen Strömungswegs (P) darstellen, die ringförmige Seitenwand (12) eine Seitenwand des ringförmigen Strömungswegs (P) darstellt, die äußere periphere Wand den ringförmigen Strömungsweg (P) von einer radial äußeren Seite definiert, der Boden den ringförmigen Strömungsweg (P) von einer radial inneren Seite definiert und die Seitenwand den ringförmigen Strömungsweg (P) von der axialen Seite definiert.

3. Motorstator nach Anspruch 2, wobei die Einlassöffnung (11h) in der äußeren peripheren Wand ausgebildet ist und in die äußere periphere Wand eindringt.

4. Motorstator nach Anspruch 3, wobei sich die Einlassöffnung (11h) in einem Zustand, in dem der Motorstator in einer Position montiert ist, in der eine axiale Richtung (A) des Motorstators parallel zu einer horizontalen Ebene verläuft, an einem obersten Abschnitt der äußeren peripheren Wand in einer vertikalen Richtung befindet.

5. Motorstator nach einem der Ansprüche 2 bis 4, wobei es sich bei dem Motorstator um einen Stator eines Motors mit konzentrierter Wicklung handelt, die Spulenkörper (4) einen ersten Endzahnabschnitt (41) und einen zweiten Endzahnabschnitt (42) aufweisen, die sich in Richtung einer axialen Seite relativ zu dem Eisenkern (2) erstrecken, sich die ersten Endzahnabschnitte (41) an einer radial äußeren Seite der zweiten Endzahnabschnitte (42) befinden, der erste Endzahnabschnitt (41) einer Vielzahl der Spulenkörper (4) in der Umfangsrichtung angeordnet ist, der zweite Endzahnabschnitt (42) einer Vielzahl der Spulenkörper (4) in der Umfangsrichtung angeordnet ist,
sich die äußere periphere Wand an einer radial äußeren Seite der ersten Endzahnabschnitte (41) befindet und die zweiten Endzahnabschnitte (42) einer Vielzahl der Spulenkörper (4) an der ringförmigen Seitenwand (12) anliegen und die innere periphere Wand darstellen.

6. Motorstator nach Anspruch 5, wobei die ringförmige Seitenwand (12) mit einem ringförmigen Montageabschnitt (12p) versehen ist, der in Richtung der Spulenkörper (4) vorsteht, und der zweite Endzahnabschnitt (42) einer Vielzahl der Spulenkörper (4) als Ganzes von einer radial äußeren Seite auf den ringförmigen Montageabschnitt (12p) aufgesteckt ist.

7. Motorstator nach Anspruch 6, wobei der zweite Endzahnabschnitt (42) einer Vielzahl von Spulenkörpern (4) als Ganzes durch Spielpassung oder Übergangspassung auf den ringförmigen Montageabschnitt (12p) montiert ist.

8. Motorstator nach Anspruch 6, wobei der zweite Endzahnabschnitt (42) einer Vielzahl der Spulenkörper (4) von der anderen axialen Seite an der ringförmigen Seitenwand (12) anliegt.

9. Motor, umfassend den Motorstator nach einem der Ansprüche 1 bis 8.

10. Fahrzeugleistungssystem, umfassend den Motor nach Anspruch 9.
